# EUROPÄISCHE PATENTSCHRIFT

(11) **EP 4 038 308 B1**
(45) Veröffentlichungstag und Bekanntmachung des Hinweises auf die Patenterteilung: **08.11.2023**
(21) Anmeldenummer: 20785934.9
(22) Anmeldetag: 28.09.2020
(51) Int. Cl.: F16N 17/00, F16N 1/00, B21D 37/18, B21C 23/32, B21D 22/28, B21D 22/20

(54) **SCHMIERMITTEL-APPLIKATOR AN EINER ALS STRANG- ROHR -ODER LOCHPRESSE AUSGEBILDETEN METALLPRESSE SOWIE VERFAHREN ZUR SCHMIERUNG EINES DORNS AN EINER ALS STRANG- ROHR- ODER LOCHPRESSE**
LUBRICANT APPLICATOR ON A METAL PRESS IN THE FORM OF AN EXTRUSION PRESS, TUBE PRESS OR PUNCHING PRESS, AND METHOD FOR LUBRICATING A MANDREL ON A METAL PRESS IN THE FORM OF AN EXTRUSION PRESS, TUBE PRESS OR PUNCHING PRESS
APPLICATEUR DE LUBRIFIANT SUR UNE PRESSE MÉTALLIQUE SE PRÉSENTANT SOUS LA FORME D'UNE PRESSE À ÉTIRER, D'UNE PRESSE À TUBES OU D'UNE PRESSE À DÉCOUPER, ET PROCÉDÉ DE LUBRIFICATION D'UN MANDRIN SUR UNE PRESSE MÉTALLIQUE SE PRÉSENTANT SOUS LA FORME D'UNE PRESSE À ÉTIRER, D'UNE PRESSE À TUBES OU D'UNE PRESSE À DÉCOUPER

(30) Priorität: 30.09.2019 DE 102019214981
(43) Veröffentlichungstag der Anmeldung: 10.08.2022
(73) Patentinhaber: SMS Group GmbH, 40237 Düsseldorf (DE)
(72) Erfinder: DEL QUARTO, Vincenzo, 41379 Brüggen (DE); GALA LOSADA, Valentin, 41065 Mönchengladbach (DE)
(74) Vertreter: Kross, Ulrich
(86) Internationale Anmeldenummer: PCT/EP2020/077122
(87) Internationale Veröffentlichungsnummer: WO 2021/063895

(56) Entgegenhaltungen:
- EP-B1- 0 051 159
- DE-A1- 3 230 095
- DE-A1- 19 517 109
- FR-A1- 2 155 946
- US-A- 3 633 651

## Beschreibung

Die Erfindung betrifft einen Schmiermittel-Applikator an einer als Strang- Rohr- oder Lochpresse ausgebildeten Metallpresse mit den Merkmalen des Oberbegriffs von Anspruch 1.

Aus der DE 195 17109 A 1 sind eine Formsprüheinrichtung an einer Umformungsmaschine und ein Verfahren zum Steuern einer Formsprüheinrichtung bekannt. Weiterer Stand der Technik ist in den Dokumenten FR 2 155 946 A1, DE 32 30 095 A und US 3 633 651 A beschrieben.

Ein Schmiermittel-Applikator für eine als Strang- Rohr- oder Lochpresse ausgebildete Metallpresse ist beispielsweise auch aus der EP 0 051 159 B1 bekannt. Die EP 0 051 159 B1 offenbart eine Vorrichtung zum Schmieren von Werkzeugen an direkt oder indirekt arbeitenden Metallstrang- und/oder Rohrpressen, die sich durch einen in die Pressachse einfahrbaren oder einschwenkbaren Arm auszeichnet, der an seinem freien Ende drehbare und/oder verschiebbare Mittel zur Aufnahme eines in der Wärme schmelzenden Feststoff-Schmiermittels in Form einer Kerze trägt, wobei die Schmierstoffkerze mit ihrer Stirnseite gegen die Werkzeuge der Presse anstellbar oder verfahrbar ist. Zur automatischen Schmierung von Verschlussstück und Dorn einer indirekt-Rohrpresse ist an dem freien Ende des Arms eine pneumatische verstellbare Aufhängungsvorrichtung vorgesehen. Die Aufhängungsvorrichtung weist an ihrer einem Verschlussstück der Presse zugewandten Stirnseite eine Tragplatte auf, an welcher wiederum ein ringförmiger, um die Pressachse rotierender Schmierstoffkerzenträger angeordnet ist. Die Rotation wird mittels eines hierfür vorgesehenen Getriebemotors bewerkstelligt. Die Anordnung ist mechanisch verhältnismäßig aufwendig.

Die Notwendigkeit, den Schmierstoffkerzenträger so auszubilden, dass dieser um die Pressachse rotieren kann, ergibt sich aus dem Umstand, dass bei einer solchen Presse normalerweise der Dorn nicht gleichzeitig gedreht und in der Pressachse axial verlagert werden kann. Dies ist aber für eine gleichmäßige und möglichst großflächige Verteilung des Schmiermittels auf dem Dorn wünschenswert.

Der Erfindung liegt die Aufgabe zugrunde, einen Schmiermittel-Applikator der vorstehend genannten Art mechanisch zu vereinfachen. Der Erfindung liegt weiterhin die Aufgabe zugrunde, ein Verfahren zur Schmierung der Werkzeuge an einer Metallpresse bereitzustellen, insbesondere ein Verfahren zur Schmierung eines Dorns an einer Strang -Rohr- oder Lochpresse bereitzustellen, mit welchem eine möglichst gleichmäßige und großflächige Verteilung des Schmiermittels auf dem Werkzeug erzielt werden kann. Insbesondere soll mit dem Verfahren gemäß der Erfindung eine etwa helissenförmige Verteilung des Schmiermittels auf dem Dorn einer Metallpresse erreicht werden.

Die Aufgabe wird gelöst durch einen Schmiermittel-Applikator mit den Merkmalen des Anspruchs 1 sowie durch ein Verfahren mit den Merkmalen des Anspruchs 7. Vorteilhafte Ausgestaltungen der Erfindung ergeben sich aus den Unteransprüchen.

Nach einem Gesichtspunkt der Erfindung wird ein Schmiermittel-Applikator an einer Metallpresse bereitgestellt, der wenigstens einen in einer Pressachse der Metallpresse einschwenkbaren Arm mit wenigstens einem an einem freien Ende des Arms drehbar und/oder verschwenkbar angeordneten Schmierkopf aufweist, mit dem ein Schmiermittel auf die Werkzeuge der Metallpresse applizierbar ist, wobei sich der Schmiermittel-Applikator gemäß der Erfindung insbesondere dadurch auszeichnet, dass der Arm als mehrachsiger Knickarm ausgebildet ist.

Insbesondere ist erfindungsgemäß vorgesehen, dass der Knickarm als Bewegungsautomat ausgebildet ist, dessen Bewegungsfolge, Bewegungswege und/oder Anstellwinkel programmierbar sind. Der Arm ist erfindungsgemäß als Roboterarm ausgebildet. Die Bewegungsfolge, die Bewegungswege und/oder der Anstellwinkel des Arms können beispielsweise in einer speicherprogrammierbaren Steuerung des Schmiermittel-Applikators hinterlegt bzw. programmiert worden sein.

Ein solcher Schmiermittel-Applikator ermöglicht es, die bisher größtenteils manuell ausgeführten Tätigkeiten bei der Schmierung der Werkzeuge voll automatisiert durchzuführen. Unabhängig von dem verwendeten Schmiermedium kann die gleiche Grundkonstruktion beibehalten werden. Konstruktionswechsel des Schmierkopfs können automatisiert durchgeführt werden. Da mit dem Knickarm gemäß der Erfindung alle erdenklichen Bewegungen bzw. Freiheitsgrade realisierbar sind, können Werkzeugflächen mit großen Durchmessern mittels frei vorgegebener Bewegungsmuster des Schmierkopfs geschmiert werden.

Der Schmiermittel-Applikator kann unmittelbar an der Metallpresse befestigt sein, dieser kann allerdings auch als "Schmiermittel-Roboter "neben einer Metallpresse aufgestellt werden. Letztere Anordnung hat den Vorteil, dass die Positionierung unabhängig von der Größe und Konfiguration der Metallpresse möglich ist. Ein weiterer Vorteil des Schmiermittel-Applikators gemäß der Erfindung ist darin zu sehen, dass durch dessen Verwendung gefährliche Tätigkeiten im Heißbereich der Metallpresse vermieden werden.

Zusätzlich kann der Arm des Schmiermittel-Applikators gemäß der Erfindung sensorgeführt sein, sodass von einer Steuerung des Schmiermittel-Applikators etwaige Fehlstellungen eines Werkzeugs oder sonstige Störungen durch die Sensorik erkannt und signalisiert werden.

Erfindungsgemäß weist der Knickarm wenigstens vier, vorzugsweise fünf, besonders bevorzugt sechs Freiheitsgrade auf. Insbesondere wenn der Arm sechs Freiheitsgrade aufweist, können beliebige Bewegungen einschließlich Kippbewegungen in alle Richtungen ausgeführt werden.

Bei einer besonders bevorzugten Variante des Schmiermittel-Applikators gemäß der Erfindung ist vorgesehen, dass in den Arm wenigstens eine Medienführung integriert ist. Als Medienführung kann beispielsweise eine Schmiermittelleitung vorgesehen sein, die von einem Schmiermittelreservoir zu dem Schmierkopf geführt ist.

Bei dem Schmiermittel-Applikator, der besonders zur Schmierung einer mit einem Pressdorn versehenen Metallpresse ausgebildet ist, weist der Schmierkopf eine Dorn-Durchführung für einen zu schmierenden Dorn auf, die mit einem als Schmiermittel-Kissen ausgebildeten Futter versehen ist.

Die Erfindung umfasst weiterhin eine Strang- Rohr- oder Lochpresse als Metallpresse mit einem Schmiermittel-Applikator mit einem der vorstehend beschriebenen Merkmale.

Die der Erfindung zugrunde liegende Aufgabe wird außerdem gelöst durch ein Verfahren zur Schmierung eines Dorns an einer Strang- Rohr- oder Lochpresse unter Verwendung eines Schmiermittel-Applikators mit einem der vorstehend beschriebenen Merkmale.

Das Verfahren zeichnet sich insbesondere dadurch aus, dass in einem ersten Verfahrensschritt der Dorn der Metallpresse in eine erste Stellung verfahren wird, die ein Verschränken des Schmierkopfs in die Pressachse erlaubt, in einem zweiten Verfahrensschritt der Dorn in die Durchführung des Schmierkopfs eingefahren bzw. eingefädelt wird und in einem weiteren Verfahrensschritt der Dorn in der Pressachse axial hin und her bewegt wird, wobei diese Bewegung mit einer Rotation des Schmierkopfs um die Pressachse überlagert wird. Besonders bevorzugt wird dabei die Rotation des Schmierkopfs mit wechselnder Drehrichtung ausgeführt, sodass auf dem Dorn eine helissenförmige Schmiermittelspur erzeugt wird.

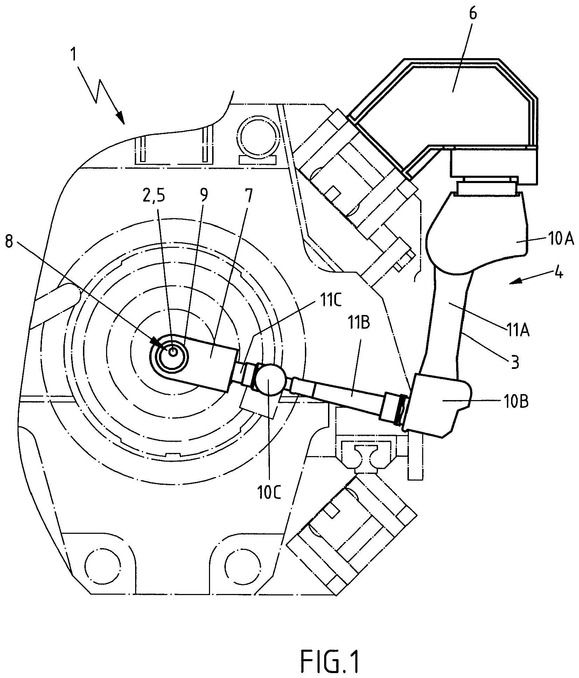

Die Erfindung wird nachstehend anhand eines in der beigefügten Zeichnung dargestellten Ausführungsbeispiels erläutert.

Die Figur zeigt einen Querschnitt durch eine Metallpresse 1, die als Strang- oder Rohrpresse ausgebildet ist, mit einer Ansicht auf den in die Pressachse 2 eingeschwenkten Knickarm 3 des Schmiermittel-Applikators 4 gemäß der Erfindung. Mit dem Bezugszeichen 5 ist der sich in der Pressachse 2 erstreckende Pressdorn der Metallpresse 1 bezeichnet.

Der Schmiermittel-Applikator 4 gemäß der Erfindung umfasst den fest an einer Konsole 6 der Metallpresse 1 montierten Knickarm 3, dessen freiem Ende ein Schmierkopf 7 drehbar befestigt ist. Der Schmierkopf 7 umfasst eine Dorn-Durchführung 8, die in der gezeigten Darstellung den Pressdorn 5 umschließt. Die Dorn-Durchführung 8 ist mit einem als Schmiermittel-Kissen ausgebildeten Futter 9 versehen, welches über eine nicht dargestellte Schmiermittelleitung von einem Schmiermittel-Reservoir mit einem Schmiermittel versorgt wird. Die Schmiermittelleitung ist vorzugsweise in dem Knickarm 3 integriert. Der Knickarm 3 umfasst in bekannter Art und Weise drei Gelenke 10 A, 10 B, 10 C, die jeweils zwei Freiheitsgrade aufweisen, sodass insgesamt mit dem Knickarm 3 sechs Freiheitsgrade realisierbar sind. Das erste Gelenk 10 A ist an der Konsole 6 drehbar angetrieben befestigt. An diesem ist ein erstes Armsegment 11 A schwenkbar angetrieben befestigt. Die Schwenkachse des ersten Armsegments 11 A erstreckt sich in einem Winkel zu der Drehachse des ersten Gelenks 10 A. Ein zweites Gelenk 10B ist an dem von der Konsole 6 abliegenden Ende des ersten Armsegments 11 A drehbar angetrieben befestigt. An dem zweiten Gelenk 10 B ist ein zweites Armsegment 11 B drehbar angetrieben befestigt, an einem dritten Armsegment 11 C ist der Schmierkopf 7 drehbar angetrieben befestigt. Die Drehachse des Schmierkopfs 7 und die Drehachse des dritten Gelenks 10 C erstrecken sich bei der in der Figur dargestellten Stellung des Knickarms 3 parallel zu der Pressachse 2.

Die Figur zeigt die Stellung des Schmierkopfs 7, in der der Pressdorn 5 von der Dorn-Durchführung 8 umschlossen wird. In dieser Stellung des Pressdorns 5 und des Knickarms 3 wird der Pressdorn 5 in der Pressachse 2 hin und her bewegt, wobei diese hin und her Bewegung von einer hin und her Drehung des Schmierkopfs 7 um die Pressachse 2 überlagert wird. Dabei liegt das Futter 9 des Schmierkopfs 7, welches nach Art eines Stempelkissens mit einem Schmiermittel getränkt ist, gegen die Umfangsfläche des Dorns 5 an und erzeugt auf dieser eine helissenförmige Schmiermittelspur.

### Bezugszeichenliste

- 1: Metallpresse
- 2: Pressachse
- 3: Knickarm
- 4: Schmiermittel-Applikator
- 5: Pressdorn
- 6: Konsole
- 7: Schmierkopf
- 8: Dorn-Durchführung
- 9: Futter
- 10 A: erstes Gelenk
- 10 B: zweites Gelenk
- 10 C: drittes Gelenk
- 11 A: erstes Armsegment
- 11 B: zweites Armsegment
- 11 C: drittes Armsegment

## Patentansprüche

1. Schmiermittel-Applikator (4) an einer als Strang- Rohr- oder Lochpresse ausgebildeten Metallpresse (1), umfassend wenigstens einen in eine Pressachse (5) der Metallpresse (1) einschwenkbaren Arm mit wenigstens einem an einem freien Ende des Arms drehbar und/oder verschwenkbar angeordneten Schmierkopf (7), mit dem ein Schmiermittel auf die Werkzeuge der Metallpresse (1) applizierbar ist, wobei der Arm als mehrachsiger Knickarm (3) ausgebildet ist, **dadurch gekennzeichnet, dass** der Knickarm (3) wenigstens vier Freiheitsgrade aufweist und dass der Schmierkopf (7) eine Dorn-Durchführung (8) für einen zu schmierenden Dorn (5) aufweist, die mit einem als Schmiermittel-Kissen ausgebildeten Futter versehen ist.

2. Schmiermittel-Applikator nach Anspruch 1, **dadurch gekennzeichnet, dass** der Knickarm (3) als Bewegungsautomat ausgebildet ist, dessen Bewegungsfolge, Bewegungswege und/oder Anstellwinkel programmierbar sind.

3. Schmiermittel-Applikator nach einem der Ansprüche 1 oder 2, **dadurch gekennzeichnet, dass** der Arm fünf, besonders bevorzugt sechs Freiheitsgrade aufweist.

4. Schmiermittel-Applikator nach einem der Ansprüche 1 bis 3, **dadurch gekennzeichnet, dass** in den Arm wenigstens eine Medienführung integriert ist.

5. Schmiermittel-Applikator nach Anspruch 4, **dadurch gekennzeichnet, dass** als Medienführung wenigstens eine Schmiermittelleitung vorgesehen ist, die von einem Schmiermittelreservoir zu dem Schmierkopf (7) geführt ist.

6. Strang- Rohr- oder Lochpresse als Metallpresse (1) mit einem Schmiermittel-Applikator (4) nach einem der Ansprüche 1 bis 5.

7. Verfahren zur Schmierung eines Dorns an einer Strang- Rohr- oder Lochpresse unter Verwendung eines Schmiermittel-Applikators nach einem der Ansprüche 1 bis 5.

8. Verfahren nach Anspruch 7, **dadurch gekennzeichnet, dass** in einem ersten Verfahrensschritt der Dorn in eine erste Stellung verfahren wird, die ein Verschwenken des Schmiermittelkopfs in die Pressachse erlaubt, in einem zweiten Verfahrensschritt der Dorn in die Durchführung des Schmierkopfs eingefahren wird und in einem weiteren Verfahrensschritt der Dorn in der Pressachse axial hin und her bewegt wird, wobei diese Bewegung mit einer Rotation des Schmierkopfs um die Pressachse überlagert wird.

9. Verfahren nach einem der Ansprüche 7 oder 8, **dadurch gekennzeichnet, dass** die Rotation des Schmierkopfs mit wechselnder Drehrichtung ausgeführt wird, sodass auf dem Dorn eine helissenförmige Schmiermittelspur erzeugt wird.

## Claims

1. Lubricant applicator (4) at a metal press (1) in the form of an extrusion press, tube press or punching press, comprising at least one arm, which is pivotable into a press axis (5) of the metal press (1), with at least one lubricating head (7), which is rotatably and/or pivotably arranged at a free end of the arm and by which a lubricant can be applied to the tools of the metal press (1), wherein the arm is constructed as a multi-axis articulated arm (3), **characterised in that** the articulated arm (3) has at least four degrees of freedom and that the lubricating head (7) has a mandrel passage (8) for a mandrel (5) which is to be lubricated and which is provided with a lining constructed as a lubricant cushion.

2. Lubricant applicator according to claim 1, **characterised in that** the articulated arm (3) is configured as an automatic movement system, the movement cycle, movement travels and/or angle of incidence is or are programmable.

3. Lubricant applicator according to one of claims 1 and 2, **characterised in that** the arm has five, with particular preference six, degrees of freedom.

4. Lubricant applicator according to any one of claims 1 to 3, **characterised in that** at least one media guide is integrated in the arm.

5. Lubricant applicator according to claim 4, **characterised in that** at least one lubricant line, which is led from a lubricant reservoir to the lubricating head (7), is provided as media guide.

6. Extrusion, tube or punching press as metal press (1) with a lubricant applicator (4) according to any one of claims 1 to 5.

7. Method of lubricating a mandrel at an extrusion, tube or punching press with use of a lubricant applicator according to any one of claims 1 to 5.

8. Method according to claim 7, **characterised in that** in a first method step the mandrel is moved into a first setting which allows pivotation of the lubricant head into the press axis, in a second method step the mandrel is moved into the passage of the lubricating head and in a further method step the mandrel is moved axially back and forth in the press axis, wherein a rotation of the lubricating head about the press axis is superimposed on this movement.

9. Method according to one of claims 7 and 8, **characterised in that** the rotation of the lubricating head is executed with changing rotational direction so that a helical lubricant track is produced on the mandrel.

## Revendications

1. Applicateur de lubrifiant (4) sur une presse à métaux (1) conçue comme une presse d'extrusion, une presse à tubes ou une presse à trous, comprenant au moins un bras pouvant pivoter dans un axe de presse (5) de la presse à métaux (1) comportant au moins une tête de lubrification (7) disposée de manière rotative et/ou pivotante à une extrémité libre du bras, au moyen de laquelle un lubrifiant peut être appliqué sur les outils de la presse à métaux (1), ledit bras étant conçu comme un bras articulé (3) à plusieurs axes, **caractérisé en ce que** le bras articulé (3) présente au moins quatre degrés de liberté et **en ce que** la tête de lubrification (7) présente un passage de pointe (8) pour une pointe (5) à lubrifier, qui est pourvu d'un mandrin conçu comme un tampon de lubrifiant.

2. Applicateur de lubrifiant selon la revendication 1, **caractérisé en ce que** le bras articulé (3) est conçu comme un automate de mouvement dont la séquence de mouvement, les trajets de mouvement et/ou l'angle d'attaque sont programmables.

3. Applicateur de lubrifiant selon l'une des revendications 1 ou 2, **caractérisé en ce que** le bras présente cinq, de préférence six degrés de liberté.

4. Applicateur de lubrifiant selon l'une des revendications 1 à 3, **caractérisé en ce qu'**au moins un guidage de fluide est intégré dans le bras.

5. Applicateur de lubrifiant selon la revendication 4, **caractérisé en ce qu'**au moins un conduit de lubrifiant guidé depuis un réservoir de lubrifiant jusqu'à la tête de lubrification (7) est prévu comme guidage de fluide.

6. Presse à métaux (1) conçue comme une presse d'extrusion, une presse à tubes ou une presse à trous pourvue d'un applicateur de lubrifiant (4) selon l'une des revendications 1 à 5.

7. Procédé de lubrification d'un mandrin d'une presse d'extrusion, d'une presse à tubes ou d'une presse à trous au moyen d'un applicateur de lubrifiant selon l'une des revendications 1 à 5.

8. Procédé selon la revendication 7, **caractérisé en ce que**, dans une première étape du procédé, la pointe est déplacée dans une première position qui permet un pivotement de la tête de lubrification dans l'axe de la presse, dans une deuxième étape du procédé, la pointe est introduite dans le passage de la tête de lubrification et, dans une autre étape du procédé, la pointe est déplacée axialement en va-et-vient dans l'axe de la presse, ce mouvement étant superposé à une rotation de la tête de lubrification autour de l'axe de la presse.

9. Procédé selon l'une des revendications 7 ou 8, **caractérisé en ce que** la rotation de la tête de lubrification est effectuée avec un sens de rotation alterné, de sorte qu'une trace de lubrifiant en forme d'hélice est produite sur la pointe.
